# EUROPEAN PATENT APPLICATION

(11) **EP 4 438 609 A1**
(43) Date of publication of application: **02.10.2024**
(21) Application number: 23165752.9
(22) Date of filing: 30.03.2023
(51) Int. Cl.: C07F 5/06, C08F 4/642, B01J 31/14

(54) **A HIGHLY EFFICIENT PROCESS FOR THE RECOVERY AND CONVERSION OF METHYLALUMINOXANE RESIDUES**

(71) Applicant: LANXESS Organometallics GmbH, 59192 Bergkamen (DE)
(72) Inventor: Niedermeyer, Heike, 44141 Dortmund (DE); Daelman, Manuel, 59514 Welver (DE)
(74) Representative: Deblon, Jörg-Stephan

(57) **Abstract**

The present invention relates to an efficient process for the preparation of highly active polymerization co-catalysts by reacting methylaluminoxane residues with C₆-C₁₈-alkyl aluminum compounds in the presence of a hydrocarbon solvent.

## Description

### Field of the invention

The present invention relates to an efficient process for the preparation of highly active polymerization co-catalysts by reacting methylaluminoxane residues with C₆-C₁₈-alkyl aluminum compounds in the presence of a hydrocarbon solvent.

### Background of the invention

In the past decades alkylaluminoxanes, in particular methylaluminoxanes have gained significant interest as initiators inter alia for polyolefin production. They are typically prepared by controlled hydrolysis of trimethylaluminum in toluene or other hydrocarbon solvents.

In US 3,219,591 the catalytic activity of compounds formed by the reaction of trialkyl aluminum with limited amounts of water in the polymerization of oxiranes is disclosed.

Manyik et al. reported the use of aluminoxanes, made by reacting 0.85 - 1.05 moles of water with alkyl aluminum compounds such as triisobutylaluminum, as co-catalysts with certain transition metal compounds in the polymerization of mono-unsaturated alphaolefins in US 3,242,099.

The same author described the preparation of alkylaluminoxanes in US 3,300,458 by passing a hydrocarbon through water to form a wet hydrocarbon and mixing the wet hydrocarbon and an alkyl aluminum solution in hydrocarbons in a conduit.

US 4,730,071 and 4,722,736 show other methods of the preparation of methylaluminoxanes by dispersing water in toluene using an ultrasonic bath or a high shear impeller to cause the dispersion and then adding a toluene solution of trimethylaluminum to the dispersion.

The main problem caused by water addition to alkylaluminum compounds, in particular trimethylaluminum to produce methylaluminoxane solutions in organic solvents, is that the solutions contain varying amounts of gel and/or small particles which aggregate to form precipitates or further gel on standing. Even when the particles and/or gels are removed by filtration, additional gel can form in the solution after 2 or 3 weeks, especially when originally prepared dilute solutions are concentrated to contain higher methylaluminoxane contents which are economically more desirable for storage, shipment and use.

Several attempts have been undertaken to remove gels and/or small particles or other hardly soluble components from methylaluminoxane solutions.

WO9319073A1 discloses the addition of aliphatic hydrocarbons to methylaluminoxane solutions in aromatic hydrocarbons to specifically precipitate gels and dispersed solids.

In EP 524,613 A a method to obtain clear, gel free solutions of alkylaluminoxane, such as methylaluminoxane in an organic solvent is described wherein a solution of the alkylaluminoxane is treated with anhydrous alkali or alkaline earth metal hydroxides and then the resulting solids are removed from the solution by filtration.

However, these methods do not further utilize the removed gels or precipitates so that they have to be carefully disposed off e.g. by full hydrolysis, thereby losing valuable raw materials.

Modified methyl aluminoxanes having two or more different types of alkyl groups have also been proposed as co-catalyst and have shown to be at least equally efficient and active inspecific applications. Examples of such systems are described in WO2014/069989 A1; Macromolecules, 32, 9078 (1999); Journal of American Chemical Society 118, 11664 (1996); and Organometallics 18, 65, (1999).

Nowadays these modified methylaluminoxanes are prepared by hydrolysis of mixtures of trimethylaluminum and at least one other C₂-C₁₈ alkylaluminum compound or by reaction of trimethylaluminum and at least one other C₂-C₁₈ alkylaluminum compound with other suitable oxygen containing molecules such as carbon dioxide. While such modified methylaluminoxanes show a better solubility in particular in aliphatic hydrocarbons the above mentioned problem of solids and to a minor extent gel formation remains substantially the same.

Since each of the aforementioned processes of the prior art results in a complex reaction mixture with different levels of gels and other precipitates and thus a diminished yield with respect to the aluminum compounds there was an urgent need for an efficient yet easy way to utilize such production residues.

### Summary of the invention

There is now provided a process for the preparation of modified methylaluminoxanes comprising at least the step of contacting a methylaluminoxane having
i) an aluminum-content of 30 to 50 wt.-%, preferably 40 to 50 wt.-% with respect to dry mass
ii) a molar ratio of methyl-groups to aluminum of 0.6 to 1.4, preferably 0.7 to 1.3 and
   more preferably 0.90 to 1.30

such methylaluminoxanes being hereinafter referred to as "methylaluminoxane residues"
with at least one compound of formula (I)

   AIR₃ (I)
wherein
R denotes C₆-C₁₈ alkyl, more preferably C₈-C₁₆ alkyl, more preferably C₈-C₁₂ alkyl
in the presence of a hydrocarbon solvent.

These and further features and advantages of the present invention will be apparent from the following detailed description and claims.

### Detailed description of the invention

The scope of the invention also encompasses any desired combinations of the ranges and areas of preference specified for each feature hereinafter.

As a starting material for the inventive process methylaluminoxane residues are used.

Methylaluminoxane, frequently also referred to as MAO, is usually produced by a controlled partial hydrolysis of trimethylaluminum, wherein water and trimethylaluminum are reacted in a solvent, for example an aromatic hydrocarbon. As a result a complex mixture is obtained which comprises a number of polymeric linear or cyclic structures in solution, at least some of which exist in dynamic equilibria.

Due to this dynamic behaviour in all known production techniques a fraction of gels and dispersed solids is formed that is hardly soluble in the organic solvent employed for methylaluminoxane production and thus separates from methylaluminoxane solutions upon standing or faster upon centrifugation. Such fractions typically exhibit the composition and parameters as described above in the summary of the invention for methylaluminoxane residues. Such methylaluminoxane residues may contain various amounts of a hydrocarbon solvent.

Common methods to specify such gels include determination of the aluminum content by inductively coupled plasma (ICP) analysis or titration after suitable digestion of the sample, the methyl to aluminum ratio by calculation from the measured volume of gas emanating from the sample during hydrolysis normalized to standard conditions as further outlined in the experimental part.

The values given above in the summary of the invention are representative for methyl aluminoxane residues comprising gels and dispersed solids.

The methylaluminoxane residues employed in the inventive process may be for example obtained by a process comprising at least the steps of
a) hydrolyzing trimethylaluminum by using a mixture of water and trimethylaluminum in a molar ratio of 0.4:1.0 to 1.0:1.0 , preferably in a molar ratio of 0.5:1.0 to 1.0:1.0, and more preferably 0.6:1.0 to 0.9:1.0 in a hydrocarbon solvent
b) separating the methylaluminoxane residues from the solution of methylaluminoxane in the hydrocarbon solvent.
c) at least partially removing unreacted trimethylaluminum from the solution of methylaluminoxane in the hydrocarbon solvent, preferably by distillation.

Hydrolysis in step a) can effected in any manner and in any suitable vessel known to those skilled in the art, i.e. by using a hydrocarbon solvent with a water content up to solubility limits, an organic solvent with water dispersed therein, whereby dispersion can beeffected using high shear forces for example high shear forces, generated by a static or dynamic mixer.

It can be effected in batch or continuously. In a preferred embodiment hydrolysis is performed continuously, e.g. using a loop reactor.

The temperature in step a) is typically in the range of -20°C to 50°C, preferably in the range of 0°C to 30°C,

The reaction pressure in step a) is typically in the range of 500 hPa to 5 MPa, preferably in the range of 800 hPa to 1 MPa, more preferably at ambient pressure.

Suitable hydrocarbon solvents include aromatic and aliphatic hydrocarbons or mixtures thereof. Specific hydrocarbon solvents include toluene, o-, m- and p-xylene, mesitylene, n-hexane and methylcyclohexane, whereby toluene is preferred.

The weight ratio of hydrocarbon solvent and trimethylaluminum employed in step a) is typically in the range of 3:1 to 50:1, preferably in the range of 5:1 to 20:1 and more preferably in the range of 7:1 to 15:1.

Upon hydrolysis and due to dynamic equilibria there is still an amount of unreacted trimethylaluminum present in the reaction mixture obtained in step a).

This amount may for example be in the range of 10 to 40 %, preferably in the range of 10 to 30 %, based on the total amount of trimethylaluminum employed in step a).

In step b) the methylaluminoxane residues are separated from the solution of methylaluminoxane in the hydrocarbon solvent.

Separation typically occurs via standard phase separation techniques e.g. by phase separation in settlement tanks, decanters or via centrifugation followed by removal of the methylaluminoxane solution.

If phase separation is effected by gravity typical resting times are between 5 mins and 12 hours, preferably between 5 mins and 12 hours.

In step c) the unreacted trimethylaluminum present in the solution of methylaluminoxane in the hydrocarbon solvent after separation of the methylaluminoxane residues in step b) is at least partially removed, preferably by distillation.

As used herein the term distillation encompasses all techniques in which liquid compounds are separated via intermediate vaporization. This includes distillation, fractionation, rectification, flashing and similar techniques known to those skilled in the art to fulfil this purpose.

The temperature in step c) is typically in the range of 5°C to 40°C, preferably in the range of 10°C to 25°C,

The reaction pressure in step c) is typically in the range of 5 hPa to 50 hPa, preferably in the range of 10 hPa to 30 hPa,

After step c) the content of trimethylaluminium in the mixture may for example be in the range of 3 to 8 %, based on the total amount of aluminum present in the mixture.

The trimethylaluminum content as referred to above is measured by proton NMR as specifically described in Donald W. Imhoff, Larry S. Simeral, Samuel A. Sangokoya and James H. Peel; "Characterization of Methylaluminoxanes and Determination of Trimethylaluminum Using Proton NMR"; Organometallics 1998, 17, 10, 1941-1945.

In one embodiment the content of organic hydrocarbon solvent is for example 70 to 95 wt-%, preferably 85 to 95 wt.-%.

The methylaluminoxane solution is then, eventually after removal of hydrocarbon solvent and adjustment of the methylaluminoxane content, ready for storage, shipment and further use.

The methylaluminoxane residue, preferably the methylaluminoxane residue obtained according to step b) of aforementioned process is reacted with at least one compound of formula (I) as defined above in the presence of a hydrocarbon solvent, whereby for the organic hydrocarbon solvents the same definition, examples and preferred embodiments as mentioned above shall apply here as well.

For the avoidance of doubt the methylaluminoxane residue may contain hydrocarbon solvent and amounts of the solution of methylaluminoxane in the hydrocarbon solvent since the 100 % separation of the typically insoluble methylaluminoxane residues is technically not viable due to phase separation dynamics and swelling behaviour of the insoluble methylaluminoxane residues. However, as long as the parameter ranges given in the summary of the invention are fulfilled, these residues are referred to and shall be encompassed by the term methylaluminoxane residues.

Specific compounds of formula (I) include tris(n-octyl)aluminum and tris(n-hexyl)aluminum.

In a process according to the invention the ratio of the methylaluminoxane residue and the compounds of formula (I) is for example 1:1 to 200:1, in another embodiment 1.5:1.0 to 25.0:1.0 with regard to their respective aluminum content.

The hydrocarbon solvents generally and preferably are the same as described above for step i) to prepare the methylaluminoxane residue.

The amount of hydrocarbon solvent employed is typically selected such that the final concentration of modified methylaluminoxanes is in the range of 2 to 20 wt.-%, preferably from 5 to 15 wt-%.

The temperature in step ii) is typically in the range of 0°C to 50°C, preferably in the range of 10°C to 40°C.

The reaction is typically carried out at ambient pressure or at the pressure developing in the vessel employed for the reaction during the reaction.

The reaction is typically carried out by adding the at least compound of formula (I) either neat or dissolved in the hydrocarbon solvent to the methylaluminoxane residue and preferably stirring, shaking, exposing to ultrasound or otherwise agitating the mixture to facilitate the reaction.

The reaction time is typically from 5 minutes to 24 hours, preferably 1 hour to 16 hours. Longer reactions times are possible but obviously do not provide any advantage.

As a result the methylaluminoxane residue is at least partially dissolved and a solution of the modified methylaluminoxane is formed which then can be used either directly as obtained by the process according to the invention or a further separation step from remaining methylaluminoxane residue.

In one embodiment the content of modified methylaluminoxane in the solution obtained according to the invention is adjusted by addition or removal of hydrocarbon solvent.

Such separation may be performed in full analogy to the separation as described for step ii) in the preparation of the methylaluminoxane residue.

The modified methylaluminoxanes according to the invention or their solutions typically exhibit a molar ratio of methyl groups to non-methyl alkyl groups of 200 to 1 preferably of 100 to 2 as determined by ¹H-NMR. The modified methylaluminoxanes and their solutions as defined above or obtainable by the process according to the invention are also encompassed by the invention.

The modified methylaluminoxanes according to the invention are in particular useful as co-catalyst in polymerizations such as olefin polymerizations.

Therefore the invention further encompasses the use of the modified methylaluminoxanes according to the invention as co-catalyst or activator in polymerizations reactions.

In one embodiment the modified methylaluminoxanes according to the invention are employed as co-catalysts in combination with at least one transition metal compound thereby forming a polymerization catalyst, which is also encompassed by the invention.

In one embodiment the inventive polymerization catalysts are prepared by absorbing and/or reacting the modified methylaluminoxanes according to the invention and/or the transition metal compounds with a solid carrier material.

In a preferred embodiment the solid carrier material has a particle size in the range of 2 to 200 µm, preferably 5 to 100 µm.

Suitable solid carrier materials include but are not limited to inorganic compounds such as oxides, hydroxides or mixed oxides and hydroxides of silicon, aluminum, magnesium and titanium such as silica (SiO2), alumina (Al₂O₃) and titania (TiO₂). Its apparent to those skilled in the art that the aforementioned specific materials due to their chemical and structural nature still exhibit a residual amount of hydroxyl groups.

In one embodiment the carrier materials therefore exhibit a surface hydroxyl group content of 0.1 to 4.0 mmol/g and preferably in an amount of 1.0 to 3.0 mmol/g.

The amount of the surface hydroxyl group can be readily determined by, for example, measuring the amount of methane generated upon reacting the solid carrier material with trimethyl aluminum.

In another embodiment the carrier materials exhibit a BET surface of 50 m²/g to 2.000 m²/g, preferably 100 m²/g to 1000 m²/g and more preferably 200 m²/g to 500 m²/g.

In another embodiment the carrier materials exhibit a pore volume of 0.5 cm³/g to 2.0 cm³/g, preferably 0.8 cm³/g to 1.8 cm³/g and more preferably 1.2 cm³/g to 1.8 cm³/g.

As used herein BET surfaces and pore volumes are measured by nitrogen adsorption in accordance with DIN ISO 9277:2010 (EN).

In order to produce the inventive polymerization catalyst the amount of the modified methylaluminoxane to be adsorbed onto or reacted with the solid carrier material can be generally determined by the amount of surface hydroxyl groups.

Typically, the amount of the modified methylaluminoxane in the range of 2 to 20 mmol/g and preferably in the range of 4 to 10 mmol/g of solid carrier material.

In order to produce the inventive polymerization catalyst the amount of the transition metal compound to be adsorbed onto or reacted with the solid carrier material can be controlled by the size and pore volume of the solid particle carrier, the amount of surface hydroxyl groups and the amount of the modified methylaluminoxane and typically is in the range of 0.03 to 0.3 mmol/g and preferably in the range of 0.05 to 0.15 mmol/g of solid carrier material.

The transition metal compound used in combination with the modified methylaluminoxane whether as such or on a solid carrier material may be any known catalyst for olefin polymerization.

Such transitional metal compounds include those represented by formula (II)

MR¹R²R³R⁴ (II)

wherein M represents a transition metal; and wherein one or two or three or four, preferably one or two, more preferably two of R¹, R², R³ and R⁴ either singly or jointly form an organic ligand comprising at least one unsubstituted or substituted cyclopentadienyl anion moiety or unsubstituted or substituted indenyl anion moiety or unsubstituted or substituted fluorenyl anion moiety; and wherein the remaining residues R¹, R², R³ and R⁴ are each independently selected from the group consisting of C₁-C₂₀-alkyl, C₁-C₂₀-alkoxy, C₆-C₂₀-aryloxy, C₇-C₂₀-arylalkyl (C₁-C₂₀)-trialkylsilyl, (C₁-C₂₀)-alkylamide, (C₁-C₂₀)-alkylimide, hydride and halogenide such as chloride, bromide and iodide.

In a preferred embodiment M in formula (II) M represents titanium, zirconium, hafnium, chromium, vanadium, manganese, iron, cobalt, nickel, and palladium, whereby titanium, zirconium, chromium, iron, and nickel are preferred and zirconium and hafnium are even more preferred.

In an exemplary embodiment the transition metal compound of formula (II) include bis(cyclopentadienyl)-zirconium monochloride monohydride, bis(cyclopentadienyl)-zirconium monobromide monohydride, bis(cyclopentadienyl)-methylzirconium hydride, bis(cyclopentadienyl)ethylzirconium hydride, bis(cyclopentadienyl)phenylzirconium hydride, bis(cyclopentadienyl)-benzylzirconium hydride, bis(cyclopentadienyl)-neopentylzirconium hydride, bis-(methylcyclopentadienyl)-zirconium monochloride hydride, bis(indenyl-)zirconium monochloride hydride, bis(cyclopentadienyl-)zirconium dichloride, bis-(cyclopentadienyl)-zirconium dibromide, bis(cyclopentadienyl)-methylzirconium mono-chloride, bis(cyclopentadienyl)ethylzirconium monochloride, bis(cyclopentadienyl)-cyclohexylzirconium monochloride, bis(cyclopentadienyl)-phenylzirconium monochloride, bis(cyclopentadienyl)-benzylzirconium monochloride, bis(methylcyclopentadienyl)-zirconium dichloride, bis(dimethylcyclopentadienyl)-zirconium dichloride, bis(n-butylcyclopentadienyl)-zirconium dichloride, bis(indenyl)zirconium dichloride, bis(indenyl)zirconium dibromide, bis(cyclopentadienyl)-zirconium dimethyl, bis(cyclopentadienyl)zirconium diphenyl, bis(cyclopentadienyl)-zirconium dibenzyl, bis(cyclopentadienyl)-zirconium monomethoxymonochloride, bis(cyclopentadienyl)-zirconium, monoethoxy-monochloride, bis(methylcyclopentadienyl)-zirconium monoethoxy-monochloride, bis(cyclopentadienyl)-zirconium monophenoxymonochloride, and bis(fluorenyl)-zirconium dichloride, ethylene-bis(indenyl)dimethyl-zirconium, ethylene-bis(indenyl)-diethylzirconium, ethylene-bis(indenyl)diphenylzirconium, ethylene-bis(indenyl)-methylzirconium monochloride, ethylene-bis(indenyl)ethylzirconium monochloride, ethylene-bis(indenyl)methylzirconium monobromide, ethylene-bis(indenyl)zirconium dichloride, and ethylene-bis(indenyl)zirconium bromide.

In another exemplary embodiment the transition metal compound of formula (II) includes dimethylsilyl-bis-(1-indenyl)-zirconium(IV)-dichloride, dimethylsilandiyl-bis(2-methylindenyl)zirconium dibromide, dimethylsilandiyl-bis(2-methyl-4-phenylindenyl)zirconium dichloride, dimethylsilandiyl-bis[2-methyl-4-(1-naphthyl)indenyl]zirconium difluoride, dimethylsilandiyl-bis[2-methyl-4-(1-naphthyl)indenyl]hafnium dichloride, dimethylsilandiyl-bis(2-methyl-4,5-benzoindenyl)zirconium dichloride, dimethylsilandiyl-bis(4,5-benzoindenyl)zirconium dichloride, dimethylsilandiyl-bis(2-methyl-4,6-diisopropylindenyl)zirconium difluoride, dimethylsilandiyl-bis(2-ethylindenyl)zirconium dichloride, dimethylsilandiyl-bis(2ethyl-4-phenylindenyl)zirconium dichloride, dimethylsilandiyl-bis(2-ethyl-4-phenylindenyl)hafnium dichloride, dimethylsilandiyl-bis[2-ethyl-4-(1-naphthyl)indenyl]zirconium dichloride, dimethylsilandiyl-bis(2-ethyl-4,5-benzoindenyl)zirconium dichloride, dimethylsilandiyl-bis(4,5-benzoindenyl)zirconium dichloride, dimethylsilandiyl-bis(2-ethyl-4,6-diisopropylindenyl)zirconium dichloride, dimethylsilandiyl-bis(2-ethyl-4,6-dimethylindenyl)zirconium dichloride, dimethylsilandiyl-bis(2,4,6-trimethylindenyl)zirconium dichloride, dimethylsilandiyl-bis(2,4,6-trimethylindenyl)hafnium dichloride, (1H-inden-2-yl)dimethyl-silyl-(2,3,4,5-tetramethylcyclopenta-2,4-dienyl)zirconium dichloride, dimethyl-silyl-(2-phenyl-1H-inden-1-yl)(2,3,4,5,-tetramethylcyclopenta-2,4-dienyl) zirconium dichloride, dimethyl-silyl-(2-methyl-4-phenyl-1-H-inden-1-yl)(2,3,4,5-tetramethylcyclopenta-2,4-dienyl) zirconium dichloride, dimethylsilyl -(3-phenyl-1-H-inden-1-yl)(2,3,4,5-tetramethylcyclopenta-2,4-dienyl) zirconium dichloride, (2-isopropyl-1H-inden-1-yl)dimethyl-silyl-(2,3,4,5-tetramethylcyclopenta-2,4-dienyl) zirconium dichloride, (1H-inden-2-yl)dimethyl(2,3,4,5-tetramethyl-cyclopenta-2,4-dienyl) zirconium dichloride, dimethyl-silyl-(1-methyl-2-phenyl-1-H-inden-3-yl)(2,3,4,5-tetramethyl-cyclopenta-2,4-dienyl)zirconium dichloride, dimethyl-silyl-(1-methyl-2-phenyl-1 H-inden-3-yl)(2,3,4,5-tetramethyl-cyclopenta-2,4-dienyl)hafnium dichloride, (1H-inden-2-yl)dimethyl-silyl-(2,3,4,5-tetramethyl-cyclopenta-2,4-dienyl)hafnium dichloride, dimethylsilyl-(2-phenyl-1H-inden-1-yl)(2,3,4,5-tetramethylcyclopenta-2,4-dienyl) hafnium dichloride, dimethyl-silyl-(2-methyl-4-phenyl-1-H-inden-1-yl)(2,3,4,5-tetramethylcyclopenta-2,4-dienyl) hafnium dichloride, Dimethyl-silyl-(3-phenyl-1-H-inden-1-yl)(2,3,4,5-tetramethylcyclopenta-2,4-dienyl) hafnium dichloride, (2-isopropyl-1H-inden-1-yl)dimethyl-silyl-(2,3,4,5,-tetramethyl-cyclopenta-2,4-dienyl) hafnium dichloride and dimethylsilyl-(2,5-dimethyl-7H-cyclopenta[1,2-b;4,3-b']dithiophen-7-yl)-(2,4,7-trimethyl-1H-inden-1-yl)-zirconium dichloride.

In one embodiment the inventive polymerization catalysts are prepared by contacting at least one transitional metal compound, the modified methylaluminoxane according to the invention, and a solid carrier material with one another in a hydrocarbon.

In one embodiment the modified methylaluminoxane according to the invention is brought in contact with a solid carrier material before contacting these components with the at least one transitional metal compound.

The polymerization catalyst according to the invention is typically prepared at temperatures of 0°C to 200°C and preferably at temperatures of 10°C to 100°C.

The contacting time to prepare the polymerization catalyst are typically 0.5 to 24 hours, preferably 0.5 to 2 hours.

Suitable hydrocarbons for the preparation of the polymerization catalysts according to the invention include aliphatic hydrocarbons such as n-pentane, n-hexane, n-heptane, n-octane, isooctane; cyclic aliphatic hydrocarbons such as cyclopentane, cyclohexane, methylcyclohexane, ethylcyclohexane, and cycloheptane; and aromatic hydrocarbons such as benzene, toluene, ethylbenzene, o-xylene, m-xylene, and p-xylene and any mixture of the aforementioned hydrocarbons, whereby n-hexane, n-heptane, n-octane, cyclohexane, methylcyclohexane, and toluene are particularly preferred.

The polymerization catalysts according to the invention can be employed in two different ways, either in a homogenous system or in a non-homogenous system in the form of a polymerization catalyst on a solid carrier material as described above.

The polymerization may be carried out as gas phase or liquid phase polymerization as bulk or continuous polymerization in a manner known per se.

Suitable monomers to be polymerized either individually or, for copolymerization, in combination include α-olefins such as ethylene, propylene, 1-butene, 1-pentene, 1-hexene, 1-decene, 1-hexadecene, 1-octadecene, and 1-eicosene; halogen-substituted olefins such as difluoroethylene, trifluoroethylene, tetrafluoroethylene, and hexafluoropropene; and cyclic olefins such as cyclopentene, cyclohexene, and norbornene.

The following examples will illustrate the invention in further detail:

### Examples

A methylaluminoxane residue obtained from a commercial plant and according to a process as disclosed above using toluene as a hydrocarbon solvent was analyzed. The methylaluminoxane residue contained 16.8 wt.-% of methylaluminoxane residue, 0.3 wt-% of trimethylaluminum and 83.2 wt% of toluene. The aluminium content was 47.0 wt-% of the dry mass, the molar methyl to aluminum ratio was 1.07.

The aluminum content was determined by complexometric titration with EDTA and using dimethylnaphthidine as indicator after decomposition of a sample with acetate buffer:
The molar methyl to aluminum ratio was determined by 1H-NMR.

### Examples 1-3

To the methylaluminoxane residue as obtained neat trialkylaluminum compounds were added in amounts as set forth in table 1 below and stirred over night i.e. 16 h. at 20°C, and the insoluble fraction i.e. the content of unreacted methylaluminum residue was measured again. The results are summarized in table 1.

**Table 1**

| Example | Type of AlR₃ employed | Al from MAO* residue [mmol] | Al from AlR₃ [mmol] / (in % of Al from MAO residue) | Unreacted MAO residue [%] |
|---|---|---|---|---|
| 1 | TOA* | 123 | 64.5 (52%) | 4.3 % |
| 2 | TOA* | 102 | 5.1 (5%) | 7.2 % |
| 3 | TiBA** (for comparison) | 205 | 10.2 (5%) | 52.3 % |

It is apparent from table 1 that only tri(n-octyl)aluminum was capable of converting the methylaluminoxane to form a modified methylaluminoxane to a significant extent, while triisobutylaluminum was by far less efficient.

## Claims

1. A process for the preparation of modified methylaluminoxanes comprising at least the step of contacting a methylaluminoxane having
i) an aluminum-content of 30 to 50 wt.-%, preferably 40 to 50 wt.-% with respect to dry mass
ii) a molar ratio of methyl-groups to aluminum of 0.6 to 1.4, preferably 0.7 to 1.3, and more preferably 0.90 to 1.30.
such methylaluminoxanes being hereinafter referred to as "methylaluminoxane residues"
with at least one compound of formula (I)
AIR₃ (I)
wherein
R denotes C₆-C₁₈ alkyl, more preferably C₈-C₁₆ alkyl, more preferably C₈-C₁₂ alkyl
in the presence of a hydrocarbon solvent.

2. The process according to claim 1, wherein methylaluminoxane residues employed in step i) are obtained by a process comprising at least the steps of
a) hydrolyzing trimethylaluminum by using a mixture of water and trimethylaluminum in a molar ratio of 0.4:1.0 to 1.0:1.0 , preferably in a molar ratio of 0.5:1.0 to 1.0:1.0, and more preferably 0.6:1.0 to 0.9:1.0 in a hydrocarbon solvent
b) separating the methylaluminoxane residues from the solution of methylaluminoxane in the hydrocarbon solvent.
c) at least partially removing unreacted trimethylaluminum, preferably by distillation.

3. The process according to claim 2, wherein temperature in step a) is in the range of -20°C to 50°C, preferably in the range of 0°C to 30°C and/or, preferably and the reaction pressure in step a) is in the range of 500 hPa to 5 MPa, preferably in the range of 800 hPa to 1 MPa.

4. The process according to claim 2, wherein hydrocarbon solvents are selected from the group including aromatic and aliphatic hydrocarbons or mixtures thereof.

5. The process according to any one of claims 1 to 4, wherein the compounds of formula (I) are selected from the group including tris(n-octyl)aluminum and tris(n-hexyl)aluminum, preferably is tris(n-octyl)aluminum.

6. The process according to any one of claims 1 to 5, wherein the ratio of the methylaluminoxane residue and the compounds of formula (I) is for 1:1 to 200:1, in another embodiment 1.5:1.0 to 25.0:1.0 with regard to their respective aluminum content.

7. The process according to any one of claims 1 to 6, wherein the reaction time from 5 minutes to 24 hours, preferably 1 hour to 16 hours.

8. Modified methylaluminoxanes obtainable according to any one of claims 1 to 7.

9. The modified methylaluminoxanes according to claim 8 having a molar ratio of methyl groups to non-methyl alkyl groups of 200 to 1 preferably of 100 to 2 as determined by ¹H-NMR.

10. Use of the modified methylaluminoxanes according to claims 8 or 9 as co-catalyst or activator in polymerizations, preferably as co-catalyst or activator in olefin polymerizations.

11. The use according to claim 10, wherein the modified methylaluminoxanes according to claims 8 or 9 are employed as co-catalysts or activators in combination with at least one transition metal compound.

12. Polymerization catalyst comprising the modified methylaluminoxane according to claim 8 or 9, and preferably additionally at least one transition metal compound.

13. A process for the polymerization of olefina, preferably the polymerization ethylene, propylene, 1-butene, 1-pentene, 1-hexene, 1-decene, 1-hexadecene, 1-octadecene, and 1-eicosene, halogen-substituted olefins such as difluoroethylene, trifluoroethylene, tetrafluoroethylene, and hexafluoropropene; and cyclic olefins such as cyclopentene, cyclohexene, and norbornene or mixtures of any of the aforementioned, wherein the modified methylaluminoxanes according to claims 8 or 9 or the the polymerization catalysts according to claim 12 are employed.
